# EUROPEAN PATENT SPECIFICATION

(11) **EP 1 751 371 B1**
(45) Date of publication and mention of the grant of the patent: **20.08.2008**
(21) Application number: 05701054.8
(22) Date of filing: 20.01.2005
(51) Int. Cl.: E04D 13/14

(54) **ELEMENT IN WEB OR PLATE FORM**
BAHN- ODER PLATTENFÖRMIGES ELEMENT
ELEMENT SOUS FORME DE BANDE OU DE PLAQUE

(30) Priority: 09.03.2004 DE 202004003764 U
(43) Date of publication of application: 14.02.2007
(73) Proprietor: Meinecke, Bernd, 65207 Wiesbaden (DE)
(72) Inventor: Meinecke, Bernd, 65207 Wiesbaden (DE)
(74) Representative: Kampfenkel, Klaus
(86) International application number: PCT/EP2005/000505
(87) International publication number: WO 2005/085548

(56) References cited:
- EP-A- 1 201 845
- WO-A-93/06318
- US-A- 4 201 698
- US-B1- 6 503 601

## Description

The invention relates to an element in web or plate form, in particular a connecting element for the roof area of a structure.

Connecting or sealing strips are used specifically in the roof area as a connection for chimneys and windows for the waterproof and weather-resistant covering and sealing of joints.

Conventional connecting elements comprise a lead sheet which has a thickness of approximately 1.25 mm. A corrosion-stable tin coating is respectively applied to the outer surfaces of the lead sheet. A UV-resistant paint coating can be applied on one of the corrosion-stable tin coatings, whereas a plastic adhesive compound covered by a protective film may be applied over the full surface area on the other corrosion-stable tin coating.

The invention is based on the object of providing a replacement for lead sheets which are used as connecting elements in the roof area.

The basis of the invention is the fact that toxic substances can get into the groundwater by being washed out from lead sheets.

To be regarded as a key idea of the invention is the replacement of approximately 1.25 mm thick lead sheet by a sandwich structure, for example a composite material, which has essentially the same physical properties as the lead sheet.

WO 93/06318 A1 shows an element according to the preamble of claim 1.

In this way, toxic substances can be prevented from getting into the groundwater when the lead sheets are washed out.

The technical problem stated above is solved by an element in web or plate form according to Claim 1.

This provides an element in web, sheet or plate form which has a plastically deformable sandwich structure, in which an elastomeric material layer is arranged between two metal foils, the sandwich structure having a thickness of approximately 0.6 mm to 3 mm, preferably approximately 0.8 mm to 2 mm, and the elastomeric material layer having a relative density of approximately 2 to 12 g/cm³.

The element in web or plate form according to the invention has essentially the characteristics and deforming properties of a lead sheet and makes it possible for workmen to seal connections between structural parts on a roof easily and quickly. The characteristics of the material used meet European standards for environmental protection, since unnecessary pollutants such as those contained in lead sheets are not used.

Furthermore, this web or plate like element is adapted to be arranged at least between the lower horizontal border of a wall opening and the sill or lower horizontal border of a window frame. The element can be formed as a trough to accommodate the lower horizontal border of the wall opening and/or the lower horizontal border of the window frame to prevent moisture from penetrating into the wall and/or the window. Such a sealing element is useful if the wall is made by wood.
Advantageous developments are the subject of the dependent claims.

In order that the web or plate like element has similar physical properties to those of a lead sheet, the sandwich structure has a modulus of elasticity and/or a tensile or compressive strength which corresponds essentially to the modulus of elasticity and/or the tensile or compressive strength of lead.

Materials which contain a hydrocarbon mixture come into consideration with preference as the material layer. In particular, the material layer contains a butyl-rubber mixture or bitumen.

To be able to increase the relative density of the material layer, additives containing carbon, for example in the form of graphite, are added to it.

The metal foils preferably contain tin, aluminium or copper. The metal foils ensure that the sandwich structure has a modulus of elasticity which corresponds essentially to the modulus of elasticity of lead.

To obtain a weather-resistant sandwich structure, an adhesive, for example in the form of a plastic adhesive compound, which may be protected by a peel-off protective film, is applied on the outer.surface of at least one metal foil. The adhesive is preferably applied over the full surface area on the outer surface of one of the two metal foils.

The web or plate like element may be pleated in order to provide a reserve of material, so that the element in web or plate form can be adapted to different structure elements such as roofs or wall openings. The reserve of material is in this case at least 40%.

Thanks to the invention, it is possible to use elements in web or plate form, in particular for structural parts in the roof area, without lead sheets but without having to dispense with the physical properties of lead.

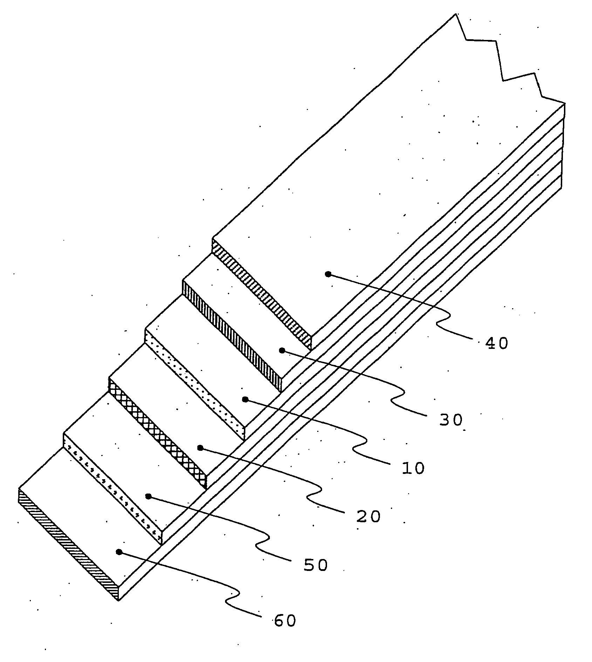

The invention is explained in more detail below on the basis of an exemplary embodiment in conjunction with the accompanying figure.

The figure shows an element 5 in web or plate form, which has for example a butyl-rubber mixture as a middle material layer 10. The material layer 10 is arranged between two metal foils 20 and 30; in the present case these may be aluminium foils. The sandwich structure made up of the two aluminium foils 20 and 30 and the material layer 10 arranged in between has a physical behaviour which corresponds essentially.to the behaviour of lead sheet; which has previously been used as a connecting element in the roof area. The sandwich structure comprising the two aluminium foils 20 and 30 and the material layer 10 arranged in between preferably has a thickness of 1.25 mm, a width of approximately 150 to 1000 mm and a length of approximately 2500 to 12,000 mm. Since the web or plate like element is intended to replace lead sheets, the sandwich structure comprising the two aluminium foils 20 and 30 and the material layer 10 arranged in between has a modulus of elasticity and/or a tensile or compressive strength which correspond to those of lead.

In order to increase the relative density of the material layer 10, graphite may be admixed with the material.

The sandwich structure, for example, is produced by the material layer 10 being inserted between the aluminium foils 20 and 30 or being pressed between the aluminium foils 20 and 30 in an extrusion process. The two aluminium foils 20 and 30 are held together by the material layer 10 produced from a butyl-rubber mixture. Subsequently, the three layers 10, 20 and 30 are pressed together and, if need be, the edges are flanged. In this way, a sandwich structure which has, for example, the above-mentioned material thickness of 1.25 mm is obtained. The sandwich structure is distinguished by the fact that it is easily deformable and that, after deforming, it retains the contour.

In order to protect the sandwich structure from chemical effects and weather-related influences, weather-resistant and/or UV-resistant coatings 40 and 50 may be applied on the two aluminium foils 20 and 30. Furthermore, in the present example, a plastic adhesive compound 60, which is protested by a peel-off protective film (not represented), is applied over the full surface area on the weather-resistant and/or UV-resistant coating 50.

The element 5 in web or plate form represented in the figure may be subsequently pleated, in order to create a reserve of material, whereby the possibility of moulding the element 5 in web or plate form to differently shaped structural elements or tiles can be improved.

## Claims

1. Element (5) in web or plate form, in particular a connecting element for the roof area of a structure, comprising a plastically deformable sandwich structure (10, 20, 30), in which an elastomeric material layer (10) is arranged between two metal foils (20, 30), the sandwich structure (10, 20, 30) having a thickness of approximately 0.6 mm to 3 mm and being **characterised in that** the elastomeric material layer (10) has a relative density of 2 to 12 g/cm³.

2. Element in web or plate form according to claim 1, **characterized in that** the sandwich structure (10, 20, 30) has a modulus of elasticity and/or a tensile or compressive strength which corresponds essentially to the modulus of elasticity and/or the tensile or compressive strength of lead.

3. Element in web or plate form according to one of the preceding claims, **characterized in that** the material layer (10) contains a hydrocarbon mixture.

4. Element in web or plate form according to claim 3, **characterized in that** the material layer (10) contains a butyl-rubber mixture or a bitumen.

5. Element in web or plate form according to one of the preceding claims, **characterized in that** the material layer (10) contains additives containing carbon.

6. Element in web or plate form according to one of the preceding claims, **characterized in that** the metal foils (20, 30) contain zinc, aluminium or copper.

7. Element in web or plate form according to one of the preceding claims, **characterized in that** a weather-resistant and/or UV-resistant coating (40, 50) is applied on the outer surface of at least one of the two metal foils (20, 30).

8. Element in web or plate form according to one of the preceding claims, **characterized in that** an adhesive (60), which is protected by a peel-off protective film, is applied on the outer surface of at least one metal foil.

9. Element in web or plate form according -to one of the preceding claims, **characterized in that** the element (5) is pleated.

## Patentansprüche

1. Bahn- oder plattenförmiges Element (5), insbesondere als Verbindungselement für den Dachbereich eines Bauwerks, das eine plastisch verformbare Sandwich-Struktur (10, 20, 30) umfasst, bei welcher eine elastomere Materialschicht (10) zwischen zwei Metallfolien (20, 30) angeordnet ist, wobei die Sandwich-Struktur (10, 20, 30) eine Dicke von ungefähr 0,6 mm bis 3 mm aufweist und
**dadurch gekennzeichnet ist, dass**
die elastomere Materialschicht (10) eine relative Dichte von 2 bis 12 g/cm³ aufweist.

2. Bahn- oder plattenförmiges Element nach Anspruch 1, **dadurch gekennzeichnet, dass** die Sandwich-Struktur (10, 20, 30) einen Elastizitätsmodul und/oder eine Zug- oder Druckfestigkeit aufweist, die im Wesentlichen dem Elastizitätsmodul und/oder der Zug- oder Druckfestigkeit von Blei entsprechen.

3. Bahn- oder plattenförmiges Element nach einem der vorhergehenden Ansprüche, **dadurch gekennzeichnet, dass** die Materialschicht (10) eine Kohlenwasserstoffmischung enthält.

4. Bahn- oder plattenförmiges Element nach Anspruch 3, **dadurch gekennzeichnet, dass** die Materialschicht (10) eine Butyl-Gummi-Mischung oder ein Bitumen enthält.

5. Bahn- oder plattenförmiges Element nach einem der vorhergehenden Ansprüche, **dadurch gekennzeichnet, dass** die Materialschicht (10) kohlenstoffhaltige Additive enthält.

6. Bahn- oder plattenförmiges Element nach einem der vorhergehenden Ansprüche, **dadurch gekennzeichnet, dass** die Metallfolien (20, 30) Zink, Aluminium oder Kupfer enthalten.

7. Bahn- oder plattenförmiges Element nach einem der vorhergehenden Ansprüche, **dadurch gekennzeichnet, dass** eine wetterfeste und/oder UV-beständige Beschichtung (40, 50) auf der Außenseite zumindest einer der beiden Metallfolien (20, 30) aufgebracht ist.

8. Bahn- oder plattenförmiges Element nach einem der vorhergehenden Ansprüche, **dadurch gekennzeichnet, dass** ein Klebstoff (60), der durch eine abziehbare Schutzfolie geschützt ist, auf der Außenseite zumindest einer Metallfolie aufgebracht ist.

9. Bahn- oder plattenförmiges Element nach einem der vorhergehenden Ansprüche, **dadurch gekennzeichnet, dass** das Element (5) gefaltet ist.

## Revendications

1. Elément (5) sous forme de bande ou de plaque, en particulier un élément de liaison pour la surface de toit d'une structure, comprenant une structure sandwich plastiquement déformable (10, 20, 30), dans laquelle une couche de matériau élastomère (10) est disposée entre deux feuilles de métal (20, 30), la structure sandwich (10, 20, 30) présentant une épaisseur d'approximativement 0,6 mm à 3 mm et étant **caractérisée en ce que** la couche de matériau élastomère (10) présente une masse volumique de 2 à 12 g/cm³.

2. Elément sous forme de bande ou de plaque selon la revendication 1, **caractérisé en ce que** la structure sandwich (10, 20, 30) présente un module d'élasticité et/ou une résistance à la traction ou à la compression qui correspond essentiellement au module d'élasticité et/ou à la résistance à la traction ou à la compression du plomb.

3. Elément sous forme de bande ou de plaque selon l'une des revendications précédentes, **caractérisé en ce que** la couche de matériau (10) contient un mélange d'hydrocarbures.

4. Elément sous forme de bande ou de plaque selon la revendication 3, **caractérisé en ce que** la couche de matériau (10) contient un mélange butyle-caoutchouc ou du bitume.

5. Elément sous forme de bande ou de plaque selon l'une des revendications précédentes, **caractérisé en ce que** la couche de matériau (10) contient des additifs contenant du carbone.

6. Elément sous forme de bande ou de plaque selon l'une des revendications précédentes, **caractérisé en ce que** les feuilles de métal (20, 30) contiennent du zinc, de l'aluminium ou du cuivre.

7. Elément sous forme de bande ou de plaque selon l'une des revendications précédentes, **caractérisé en ce qu'**un revêtement résistant aux intempéries et/ou résistant aux ultraviolets (40, 50) est appliqué sur la surface extérieure d'au moins une des deux feuilles de métal (20, 30).

8. Elément sous forme de bande ou de plaque selon l'une des revendications précédentes, **caractérisé en ce qu'**un adhésif (60), qui est protégé par un film de protection détachable, est appliqué sur la surface extérieure d'au moins une feuille de métal.

9. Elément sous forme de bande ou de plaque selon l'une des revendications précédentes, **caractérisé en ce que** l'élément (5) est plissé.
